# EUROPEAN PATENT APPLICATION

(11) **EP 1 927 886 A2**
(43) Date of publication of application: **04.06.2008**
(21) Application number: 07022168.4
(22) Date of filing: 15.11.2007
(51) Int. Cl.: G02F 1/13357

(54) **Chassis, backlight unit, liquid crystal display having the same, and method thereof**

(30) Priority: 20.11.2006 KR 20060114435
(71) Applicant: Samsung Electronics Co., Ltd., Yeongtong-gu Suwon-city, Gyeonggi-do 442-742 (KR)
(72) Inventor: Kang, Sung Yong, Seo-Gu, Daejeon, 302-740 (KR); Jung, Dae Yoon, Banseok-dong Yuseong-gu, Daejeon (KR); Kim, Choong Sik, Anyang-Si, Gyeonggi-Do, 430-708 (KR)
(74) Representative: Dr. Weitzel & Partner

(57) **Abstract**

Disclosed are a chassis, and a backlight unit and a liquid crystal display including the chassis. The chassis includes a first chassis member that includes a first base plate, a first wall extending from the first base plate in a first direction, and a first cover plate extending from the first wall and facing the first base plate. The chassis also includes a second chassis member.

## Description

### BACKGROUND OF THE INVENTION

### 1. Field of the Invention

The present invention relates generally to a chassis, and a backlight unit and liquid crystal display comprising the same. More particularly, the present invention relates to a chassis that includes constituent elements, which when interconnected, surround a light source, thereby eliminating an additional light source cover. The present invention also relates to a backlight unit and a liquid crystal display comprising the same.

### 2. Description of the Related Art

A flat panel display, for example, a liquid crystal display ("LCD"), comprises a liquid crystal display panel that displays an image thereon, a driving unit that drives the liquid crystal display panel, a backlight unit that provides light to the liquid crystal display panel, and a chassis that combines these elements with each other. The chassis comprises a bottom chassis that provides a receiving space and a top chassis disposed on the liquid crystal display panel and combined with the bottom chassis.

Much effort has been expended to reduce the number of parts in an LCD in order to simplify the production process and reduce production costs. For example, research has been conducted to develop ways to omit a light source cover for covering the light sources of an LCD in order to reduce costs and simplify production. A typical bottom chassis forms an integrated hexahedron with its upper portion being opened, rendering it unsuitable for omitting the light source cover due to the fact that the chassis, which is disposed at an incident light part, must surround the light source so that the bottom chassis acts as the light source cover. However, it is difficult and expensive to form this type of structure in a mold.

### BRIEF SUMMARY OF THE INVENTION

Exemplary embodiments of the present invention provide a chassis that includes separate constituent elements, which when interconnected, effectively surround a light source, thereby eliminating an additional light source covering. Exemplary embodiments also include a backlight unit and a liquid crystal display comprising the same.

According to an exemplary embodiment of the present invention, a chassis may include a first chassis member that includes a first base plate, a first wall extending from the first base plate in a first direction, and a first cover plate extending from the first wall and facing the first base plate, and a second chassis member.

The second chassis member may comprise a second base plate, a second wall extending from the second base plate in a second direction, and a second cover plate extending from the second wall and facing the second base plate.

The first direction may be a direction perpendicular to a first base plate, and the second direction may be a direction to perpendicular the second base plate.

The chassis may further include a third chassis member.

The chassis may further include a fourth chassis member.

The third chassis member may include a third base plate, a third wall extending from the third base plate and perpendicular to the third base plate, and a third cover plate extending from the third wall and facing the third base plate, and the fourth chassis member may include a fourth base plate, a fourth wall extending from the fourth base plate and perpendicular to the fourth base plate, and a fourth cover plate extending from the fourth wall and facing the fourth base plate.

The first to the fourth chassis members may include first to fourth fastening parts, respectively, to perform fastening.

The first to the fourth fastening parts may be formed at opposing ends of the first to the fourth chassis members, respectively.

The first fastening parts may be fastened with the third fastening part and the fourth fastening part that are formed at one end of the third chassis member and at one end of the fourth chassis member, respectively, and the second fastening parts may be fastened with the third fastening part and the fourth fastening part that formed at the other end of the third chassis member and at the other end of the fourth chassis member, respectively.

According to another exemplary embodiment of the present invention, a backlight unit may include a chassis that includes a first chassis member which includes a first base plate, a first wall extending from the first base plate and disposed perpendicular to the first base plate, and a first cover plate extending from the first wall and facing the first base plate, and a second chassis member; a mold frame fastened with the chassis; and a light source unit that includes a light source disposed in the chassis.

The backlight unit may further include a light guide plate.

The light source unit of the backlight unit may further include a first reflection sheet attached to an inner surface of at least one of the first and the second chassis members.

The first chassis member of the backlight unit may be combined with the light guide plate and spaced apart from a first lateral portion of the light guide plate to provide a space, and the light source unit may include a first light source that is disposed between the first wall of the first chassis member and the first lateral portion of the light guide plate.

The first chassis member may be fitted along the first lateral portion of the light guide plate so that the first cover plate is disposed above an upper area of the lateral portion of the light guide plate, and the first base plate is disposed below a lower area of the lateral portion of the light guide plate, and the first cover plate, the first wall, and the first base plate cover the first light source.

The second chassis member may include a second base plate, a second wall extending from the second base plate and disposed perpendicular to the second base plate, and a second cover plate extending from the second wall and facing the second base plate.

The second chassis member may be combined with the light guide plate and spaced apart from a second lateral portion of the light guide plate to provide a space, and the light source unit may include a second light source disposed between the second wall of the second chassis member and the second lateral portion of the light guide plate.

The second chassis member may be fitted along the second lateral portion of the light guide plate so that the second cover plate is disposed above an upper area of the second lateral portion of the light guide plate, and the first base plate is disposed below a lower area of the second lateral portion of the light guide plate, and the second cover plate, the second wall, and the second base plate cover the second light source.

The backlight unit may further include a third chassis member.

The backlight unit may further include a fourth chassis member.

The light source unit may further include a second reflection sheet attached to an inner surface of at least one of the third and fourth chassis members.

The third chassis member may include a third base plate, a third wall extending from the third base plate and disposed perpendicular to the third base plate, and a third cover plate extending from the third wall and facing the third base plate.

The third chassis member may be combined with the light guide plate and spaced apart from a third lateral portion of the light guide plate to provide a space, and the light source unit may include a third light source disposed between the third wall of the third chassis member and the third lateral portion of the light guide plate.

The fourth chassis member may include a fourth base plate, a fourth wall extending from the fourth base plate and disposed perpendicular to the fourth base plate, and a fourth cover plate extending from the fourth wall and facing the fourth base plate.

The fourth chassis member may be combined with the light guide plate and spaced apart from a fourth lateral part of the light guide plate to provide a space, and the light source unit may include a fourth light source disposed between the fourth wall of the fourth chassis member and the fourth lateral portion of the light guide plate.

The light source unit may include a fifth light source and a sixth light source disposed between walls of the chassis members and lateral portions of light guide plates, and the fifth light source and the sixth light source may have an 'L' shape.

The first to the fourth chassis members may include first to fourth fastening parts, respectively, to perform fastening.

The mold frame may include a first mold frame member fastened with the first chassis member, and a second mold frame member fastened with the second chassis member.

The backlight unit may further include fifth fastening parts and sixth fastening parts formed at the first chassis member and the first mold frame member, respectively, and seventh fastening parts and eighth fastening parts formed at the second chassis member and the second mold frame member, respectively.

According to another exemplary embodiment of the present invention, a liquid crystal display that comprises the backlight unit is provided.

### BRIEF DESCRIPTION OF THE DRAWINGS

The above and other aspects, features, and advantages of the present invention will become more apparent by describing in detail the exemplary embodiments thereof with reference to the attached drawings in which:
FIG. 1 is an exploded perspective view of a separation type of a bottom chassis according to an exemplary embodiment of the present invention;
FIG. 2 is a perspective view of the separation type of a bottom chassis shown in FIG. 1;
FIG. 3 is an enlarged view of a portion "A" of the separation type of the bottom chassis shown in FIG. 1;
FIG. 4 is an exploded perspective view of a backlight unit that comprises the separation type of the bottom chassis according to an exemplary embodiment of the present invention;
FIGS. 5A and 5B are cross-sectional views of the backlight unit of FIG. 4 taken along the lines I - I' and II - II'' respectively;
FIG. 6 is a cross-sectional view of a backlight unit that comprises the separation type of the bottom chassis according to another exemplary embodiment of the present invention;
FIG. 7 is an exploded perspective view of a backlight unit that comprises the separation type of the bottom chassis according to a further exemplary embodiment of the present invention;
FIGS. 8A and 8B are cross-sectional views of the backlight unit of FIG. 7 taken along the lines III - III' and IV - IV'' respectively;
FIG. 9 is an exploded perspective view of a backlight unit that comprises a separation type of the bottom chassis according to another exemplary embodiment of the present invention;
FIGS. 10A and 10B are cross-sectional views of the backlight unit of FIG. 9 taken along the lines V - V' and VI - VI', respectively; and
FIG. 11 is an exploded perspective view of a liquid crystal display that comprises the separation type of the bottom chassis according to an exemplary embodiment of the present invention.

### DETAILED DESCRIPTION OF THE INVENTION

Hereinafter, embodiments of the present invention will be described in detail with reference to the accompanying drawings. The present invention may, however, be embodied in many different forms and should not be construed as limited to the exemplary embodiments set forth herein. Rather, these exemplary embodiments are provided so that this disclosure will be thorough and complete, and will fully convey the scope of the invention to those skilled in the art. In the drawings, the size and relative sizes of layers and regions may be exaggerated for clarity.

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numbers refer to like elements throughout. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "lower" other elements or features would then be oriented "above" or "upper" relative to the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

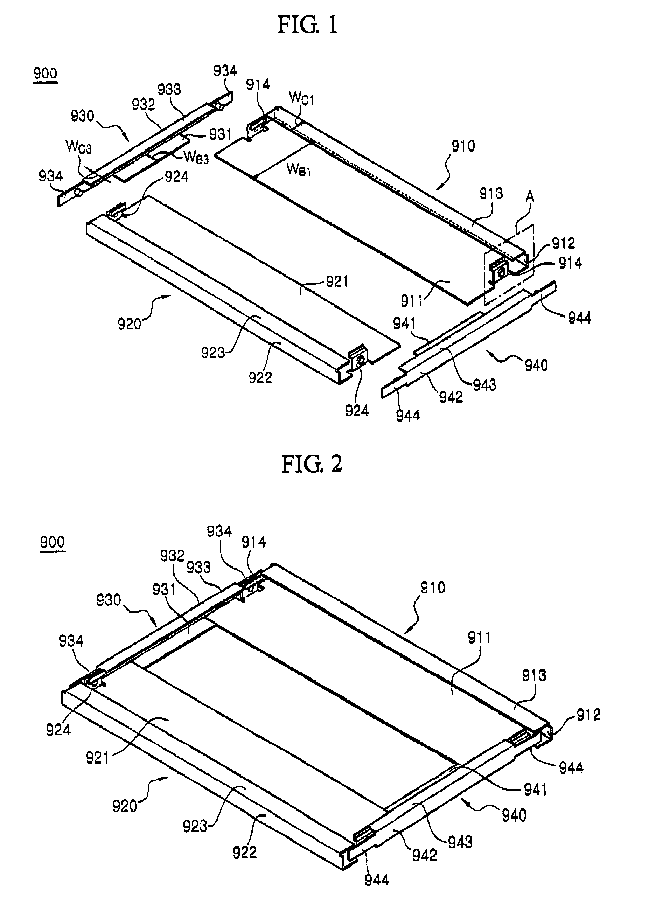

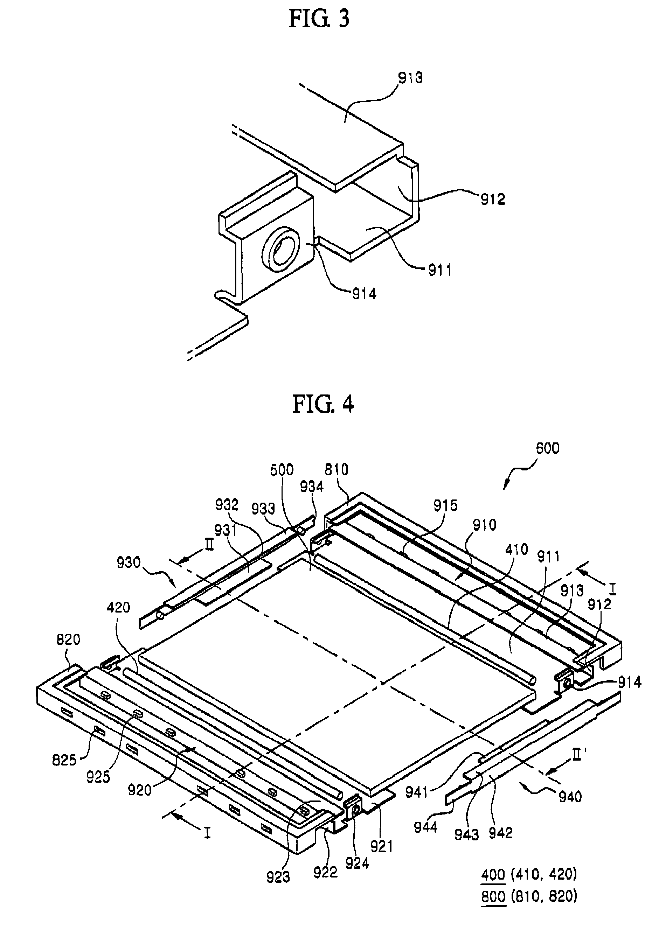

FIG. 1 is an exploded perspective view of a separation type of a bottom chassis according to an exemplary embodiment of the present invention, FIG. 2 is a perspective view of the separation type of the bottom chassis shown in FIG. 1, and FIG. 3 is an enlarged view of a portion "A" of the separation type of the bottom chassis shown in FIG. 1.

With reference to FIGS. 1 to 3, a separation type of a bottom chassis 900 comprises a first chassis member 910, a second chassis member 920, a third chassis member 930, and a fourth chassis member 940. The first to fourth chassis members 910, 920, 930, and 940 are fastened with each other to form the separation type of bottom chassis 900.

The first chassis member 910 comprises a first base plate 911, a first wall 912, a first cover plate 913, and first fastening parts 914.

The first wall 912 of the first chassis member 910 extends from the first base plate 911 in a first direction (e.g., a vertical direction). The first wall 912 is perpendicular to the first base plate 911 and is joined at a first edge of the first wall 912. The first cover plate 913 extends from a second edge of the first wall 912 and faces the first base plate 911. The first fastening parts 914 are formed at opposing ends of the first chassis member 910. In an exemplary embodiment, the first fastening parts 914 are formed at each end of the first base plate 911 and each have a plate shape and a fastening hole, and are perpendicular to the first base plate 911. It will be understood however, that the position, number, and fastening structure of the first fastening parts 914 are not limited to the exemplary embodiment described above, but may be modified.

In an exemplary embodiment, the width W_{B1} of the first base plate 911 is wider than the width W_{C1} of the first cover plate 913. However, it will be understood that the widths of the first base plate 911 and the first cover plate 913 may be the same as each other, or the first cover plate 913 and the first base plate 911 may be formed so that the width W_{C1} of the first cover plate 913 is wider than the width W_{B1} of the first base plate 911.

The second chassis member 920 comprises a second base plate 921, a second wall 922, a second cover plate 923, and second fastening parts 924. The second chassis member 920 is disposed to face the first chassis member 910. The second chassis member 920 may be formed with a structure substantially similar to that of the first chassis member 910. Therefore, a description of the structure of the second chassis member 920 will be omitted to eliminate redundancy.

The second wall 922 of the second chassis member 920 extends from the second base plate 921 in a second direction (e.g., a vertical direction). The second wall 922 is perpendicular to the second base plate 921 and is joined at a first edge of the second wall 922. The second cover plate 923 extends from a second edge of the second wall 922, and faces the second base plate 921. The second fastening parts 924 are formed at opposing ends of the second chassis member 920.

The third chassis member 930 comprises a third base plate 931, a third wall 932, a third cover plate 933, and third fastening parts 934.

The third wall 932 of the third chassis member 930 extends from the third base plate 931 in a vertical direction. The third wall 932 is perpendicular to the third base plate 931 and is joined at a first edge of the third wall 932. The third cover plate 933 extends from a second edge of the third wall 932 to face the third base plate 931. The third fastening parts 934 are formed at opposing ends of the third chassis member 930. In an exemplary embodiment, the third fastening parts 934 are formed at each end of the third wall 932, each have a plate shape and a fastening protrusion, and extend parallel to the third wall 932. It will be understood, however, that the position, number, and fastening structure of the third fastening parts 934 are not limited to the embodiments described above, but may be modified.

In an exemplary embodiment, the width W_{B3} of the third base plate 931 is wider than the width W_{C3} of the third cover plate 933. However, it will be understood that the widths of the third base plate 931 and the third cover plate 933 may be the same as each other, or the third cover plate 933 and the third base plate 931 may be formed so that the width W_{C3} of the third cover plate 933 is wider than the width W_{B3} of the third base plate 931. In an exemplary embodiment, the third base plate 931 may have a cap shape so that the center of the third base plate 931 protrudes. Alternatively, the third base plate 931 may have, for example, a rectangle shape. Further, the third cover plate 933 of the third chassis member 930 may be omitted.

The fourth chassis member 940 comprises a fourth base plate 941, a fourth wall 942, a fourth cover plate 943, and fourth fastening parts 944. The fourth chassis member 940 is disposed to face the third chassis member 930. The fourth chassis member 940 may be formed with a structure that is substantially similar to that of the third chassis member 930. Therefore, a description of the structure of the fourth chassis member 940 will be omitted to eliminate redundancy.

The fourth wall 942 of the fourth chassis member 940 extends from the fourth base plate 941 in a vertical direction. The fourth wall is perpendicular to the fourth base plate 941 and is joined at a first edge of the fourth wall 942. The fourth cover plate 943 extends from a second edge of the fourth wall 942 to face the fourth base plate 941. The fourth fastening parts 944 are formed at opposing ends of the fourth chassis member 940.

The chassis members 910, 920, 930, and 940 are fastened together using fastening parts 914, 924, 934, and 944. The first fastening parts 914, which are formed at both ends of the first chassis member 910, are each fastened with a third fastening part 934 and a fourth fastening part 944, respectively, which in turn are formed at a respective end of the third chassis member 930 and fourth chassis member 940. The second fastening parts 924, which are formed at both ends of the second chassis member 920, are each fastened with a third fastening part 934 and a fourth fastening part 944, respectively, which in turn are formed at the other respective end of the third chassis member 930 and the fourth chassis member 940.

As shown in FIG. 2, the first base plate 911 of the first chassis member 910 is spaced apart from the second base plate 921 of the second chassis member 920 to provide a space. However, it will be understood that the separation type of bottom chassis of the present invention is not limited thereto. For example, the first base plate 911 and the second base plate 921 may be formed to come into contact with each other.

While the separation type of bottom chassis 900 is shown and described to include four chassis members, it will be understood that the embodiments are not limited thereto. For example, the separation type of bottom chassis may comprise at least two chassis members.

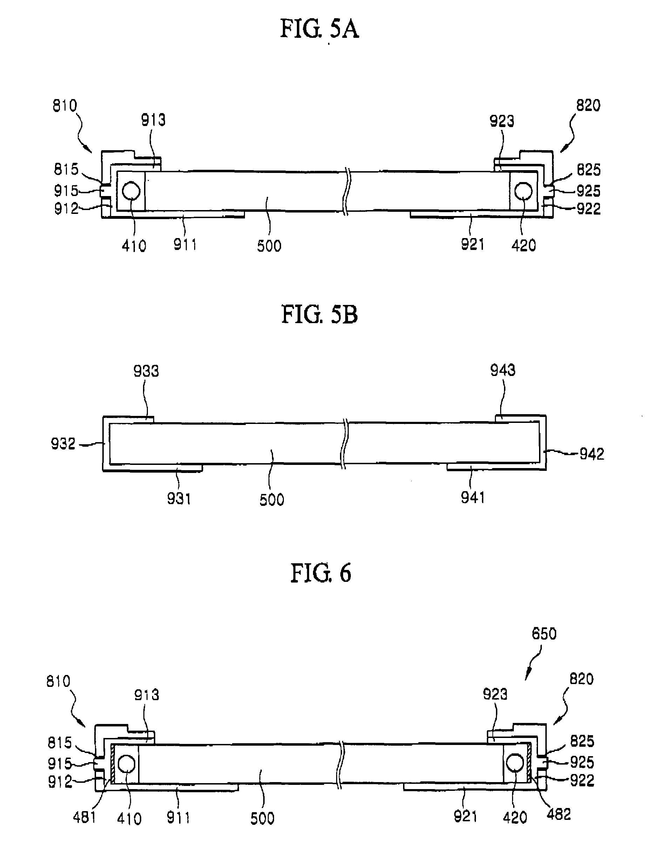

FIG. 4 is an exploded perspective view of a backlight unit that comprises a separation type of bottom chassis according to an exemplary embodiment of the present invention, and FIGS. 5A and 5B are cross-sectional views of the backlight unit of FIG. 4 taken along the lines I - I' and II - II', respectively.

With reference to FIGS. 4 to 5B, a backlight unit 600 comprises a light source unit 400, a light guide plate 500, a mold frame 800, and a separation type of bottom chassis 900. The separation type of bottom chassis 900 of the embodiment shown in FIG. 4 has a substantially similar structure as the separation type of bottom chassis 900 of FIGS. 1 to 3. Thus the differences in the structure will be primarily described hereinafter.

The first chassis member 910 comprises the first base plate 911, the first wall 912, the first cover plate 913, the first fastening parts 914, and the fifth fastening part 915.

The first wall 912 of the first chassis member 910 extends from the first base plate 911 in a first direction (e.g., a vertical direction). The first wall 912 is perpendicular to the first base plate 911 and is joined at a first edge of the first wall 912. The first cover plate 913 extends from a second edge of the first wall 912 to face the first base plate 911.

The first fastening parts 914 are formed at opposing ends of the first base plate 911. The fifth fastening part 915 is formed on an external surface of the first wall 912, and protrudes to have, e.g., a hook shape.

The second chassis member 920 comprises the second base plate 921, the second wall 922, the second cover plate 923, the second fastening part 924, and a seventh fastening part 925. The second chassis member 920 disposed to face the first chassis member 910 has substantially the same structure as the first chassis member 910. Thus, a detailed description thereof will be omitted hereinafter.

The first chassis member 910 is fitted along a first lateral portion of the light guide plate 500. In particular, the first cover plate 913 is disposed above an upper portion of a first lateral portion of the light guide plate 500 and the first base plate 911 is disposed below a lower area of the first lateral portion of the light guide plate. The second chassis member 920 is fitted along a second lateral portion of the light guide plate 500 that is parallel to the first lateral portion of the light guide plate 500. In particular, the second cover plate 923 is disposed above an upper area of the second lateral portion of the light guide plate 500, and the second base plate 921 is disposed below a lower area of the lateral portion of the light guide plate 500. The first wall 912 of the first chassis member 910 is spaced apart from the first lateral portion of the light guide plate 500 to provide a space. The second wall 922 of the second chassis member 920 is spaced apart from the second lateral portion of the light guide plate 500 to provide a space.

The light source unit 400 comprises a first light source 410 and a second light source 420, and the first light source 410 and the second light source 420 may have a bar shape. The first light source 410 is disposed between the first wall 912 of the first chassis member 910 and the first lateral portion of the light guide plate 500, and the second light source 420 is disposed between the second wall 922 of the second chassis member 920 and the second lateral portion of the light guide plate 500. Thus configured, the first chassis member 910 and the second chassis member 920 surround the first light source 410 and the second light source 420 covering each corresponding light sources. While the light source unit 400 of FIG. 4 is illustrated as having two light sources 410 and 420, it will be understood that the light source unit of the present invention is not limited thereto. For example, the light source unit 400 may comprise a single light source, or may comprise three or more light sources. Where no light source is provided, the corresponding chassis member comes into contact with a corresponding lateral portion of the light guide plate 500 and is fastened with the lateral portion of the light guide plate 500, thereby eliminating the light source cover. In this instance, the light source plate may be omitted.

The third chassis member 930 that comprises the third base plate 931, the third wall 932, the third cover plate 933, and third fastening parts 934, is fitted along a third lateral portion of the light guide plate 500. In particular, the third cover plate 933 is disposed above an upper area of the third lateral portion of the light guide plate 500 and the third base plate 931 is disposed below a lower area of the third lateral portion of the light guide plate 500. The fourth chassis member 940 that comprises the fourth base plate 941, the fourth wall 942, the fourth cover plate 943, and the fourth fastening parts 944 is fitted along a fourth lateral portion of the light guide plate 500. In particular, the fourth cover plate 943 is disposed above an upper area of the fourth lateral portion of the light guide plate 500 and the third base plate 941 is disposed below a lower area of the fourth lateral portion of the light guide plate 500. The third chassis member 930 and the fourth chassis member 940 are disposed along respective sides of the light guide plate 500 to perform fastening. The third fastening part 934 of the third chassis member 930 is fastened with respective first fastening part 914 and second fastening part 924, and the fourth fastening part of the fourth chassis member 940 is fastened with respective first fastening part 914 and second fastening part 924.

The mold frame 800 comprises a first mold frame member 810 that is fastened with the first chassis member 910, and a second mold frame member 820 that is fastened with the second chassis member 920.

A sixth fastening part 815 is formed in the first mold frame member 810, and an eighth fastening part 825 is formed in the second mold frame member 820. The sixth fastening part 815 and the eighth fastening part 825 comprise holes that are formed in a position corresponding to the fifth fastening part 915 of the first chassis member 910 and the seventh fastening part 925 of the second chassis member 920, respectively. In an exemplary embodiment, the fifth fastening part 915 and the seventh fastening part 925 may be formed, e.g., in a hook shape, and the sixth fastening part 815 and the eighth fastening part 825 that have the corresponding position to the fifth fastening part and the seventh fastening part have, e.g., the hole shape. However, it will be understood that the fifth and the seventh fastening parts may have the hole shape and the sixth and the eighth fastening parts may have the hook shape, or other fastening structures may be utilized in order to realize the advantages of the exemplary embodiments.

As described above, the mold frame 800 comprises the first mold frame member 810 that is fastened with the first chassis member 910, and the second mold frame member 820 that is fastened with the second chassis member 920. The third chassis member 930 and the fourth chassis member 940 are fixed to the first and second chassis members 910 and 920 between, and perpendicular to, the mold frame members 810 and 820, as shown in FIG. 4. Thus configured, the amount of material that is used to produce the mold frame 800 is reduced, and the production process is simplified.

FIG. 6 is a cross-sectional view of a backlight unit that comprises the separation type of bottom chassis according to another exemplary embodiment of the present invention. The backlight unit 650 shown in FIG. 6 has a substantially similar structure as the backlight unit 600 shown in FIG. 5, with the exception of the structure of the light source unit 400. Accordingly, the differences in the structure will be primarily described hereinafter.

With reference to FIG. 6, the light source unit 400 comprises the first light source 410, the second light source 420, and reflection sheets 481 and 482. The first light source 410 and the second light source 420 may have a bar shape.

The first light source 410 is disposed between the first wall 912 of the first chassis member 910 and the first lateral portion of the light guide plate 500, and the second light source 420 is disposed between the second wall 922 of the second chassis member 920 and the second lateral portion of the light guide plate 500.

In addition, the reflection sheets 481 and 482 may be attached to inner surfaces of the first chassis member 910 and the second chassis member 920, respectively, such that the first chassis member 910 and the second chassis member 920 efficiently act as the light source cover. The reflection sheets 481 and 482 may be made of a material that has excellent reflection efficiency. In an exemplary embodiment, the reflection sheet 481 is attached to the first wall 912 of the first chassis member 910, and the reflection sheet 482 is attached to the second wall 922 of the second chassis member 920. However, it will be understood that the reflection sheets of the present invention are not limited to the above-described embodiments. For example, the reflection sheets 481 and 482 may be attached to the entire inner surfaces of the first chassis member 910 and the second chassis member 920, that is, the base plates, walls, and cover plates.

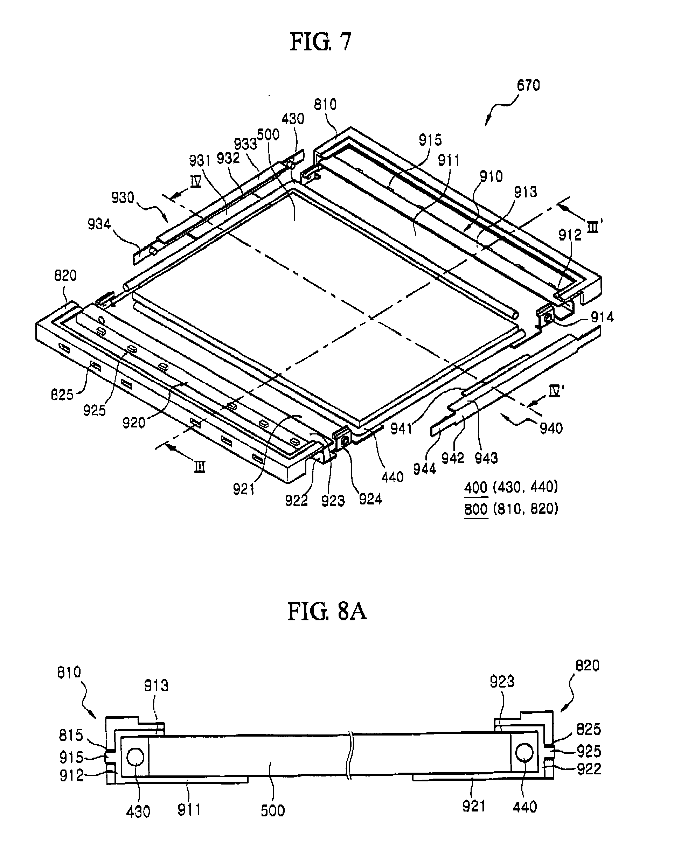

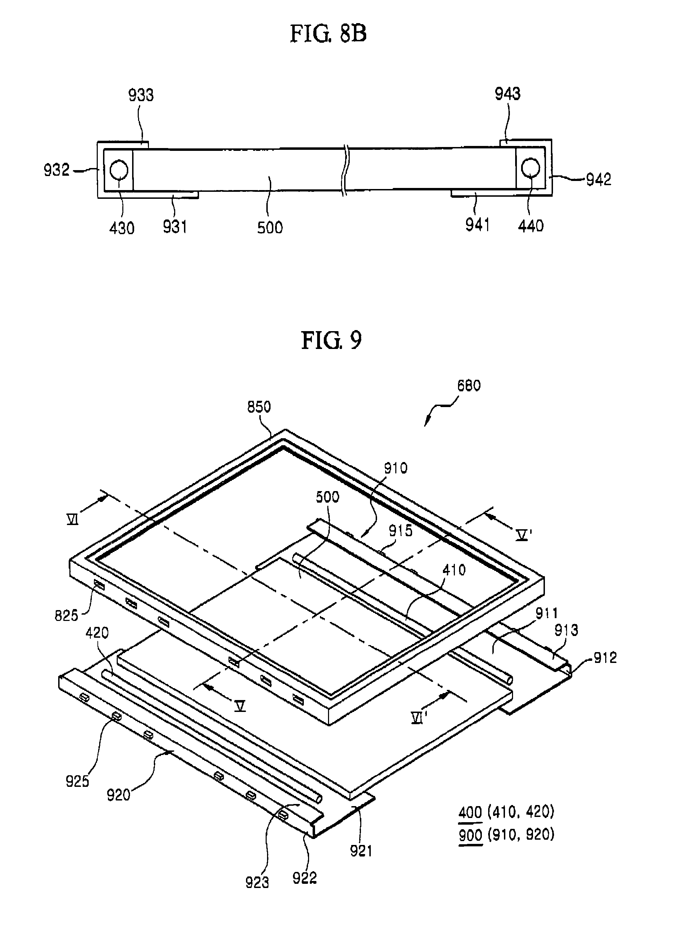

FIG. 7 is an exploded perspective view of a backlight unit that comprises the separation type of bottom chassis according to a further exemplary embodiment of the present invention, and FIGS. 8A and 8B are cross-sectional views of the backlight unit of FIG. 7 taken along the lines III - III' and IV - IV', respectively. The backlight unit of FIGS. 7 to 8B has a substantially similar structure as the backlight units of the aforementioned embodiments, with the exception of the structure of the light source unit. Thus, the differences in the structure will be primarily described hereinafter.

The first chassis member 910 is fitted along the first lateral portion of the light guide plate 500. In particular, the first cover plate 913 is disposed above an upper portion of a first lateral portion of the light guide plate 500 and the first base plate 911 is disposed below a lower area of the first lateral portion of the light guide plate 500. The second chassis member 920 is fitted along the second lateral portion of the light guide plate 500 and is parallel to the first lateral portion. In particular, the second cover plate 923 is disposed above an upper area of the second lateral portion of the light guide plate 500 and the second base plate 921 is disposed below a lower area of the second lateral portion of the light guide plate 500. The first wall 912 of the first chassis member 910 is spaced apart from the first lateral portion of the light guide plate 500 to provide a space, and the second wall 922 of the second chassis member 920 is spaced apart from the second lateral portion of the light guide plate 500 to provide a space.

In addition, the third chassis member 930 is fitted along the third lateral portion of the light guide plate 500. In particular, the third cover plate 933 is disposed above an upper area of the third lateral portion of the light guide plate 500, and the third base plate 931 is disposed below a lower area of the third lateral portion of the light guide plate 500. The fourth chassis member 940 is fitted along the fourth lateral portion of the light guide plate 500. In particular, the third wall 932 of the third chassis member 930 is spaced apart from the third lateral portion of the light guide plate 500 to provide a space, and the fourth wall 942 of the fourth chassis member 940 is spaced apart from the fourth lateral portion of the light guide plate 500 to provide a space.

The light source unit 400 comprises a third light source 430 and a fourth light source 440, and the third light source 430 and the fourth light source 440 each have a substantially 'L' shape. The third light source 430 is disposed between the first wall 912 of the first chassis member 910 and the first lateral portion of the light guide plate 500, and between the third wall 932 of the third chassis member 930 and the third lateral portion of the light guide plate 500. The fourth light source 440 is disposed between the second wall 922 of the second chassis member 920 and the second lateral portion of the light guide plate 500, and between the fourth wall 942 of the fourth chassis member 940 and the fourth lateral portion of the light guide plate 500. As shown in FIG. 7, two light sources having the 'L' shape are used. However, it will be understood that the light source of the present invention is not limited thereto. For example, four light sources having a bar shape may be used.

Although not shown in the drawings, reflection sheets may be additionally attached to the inner surfaces of the chassis members.

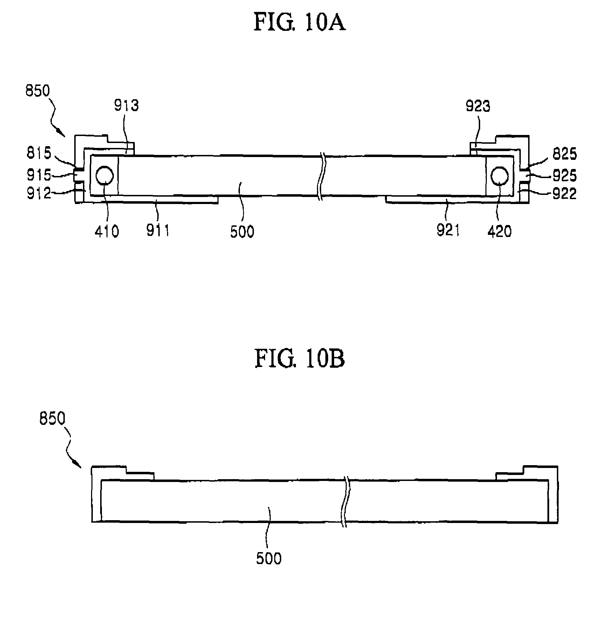

FIG. 9 is an exploded perspective view of a backlight unit that comprises a separation type of bottom chassis according to another exemplary embodiment of the present invention, and FIGS. 10A and 10B are cross-sectional views of the backlight unit of FIG. 9 taken along the lines V - V' and VI - VI', respectively. The backlight unit 680 shown in FIGS. 9 to 10B has a substantially similar structure as the backlight units described in the above-mentioned embodiments, with the exception of the structure of the separation type of bottom chassis and the mold frame. Thus, differences in structure will be primarily described hereinafter.

In an exemplary embodiment, the separation type of bottom chassis 900 comprises only the first chassis member 910 and the second chassis member 920, and the third chassis member and the fourth chassis member disclosed in the above-mentioned embodiments are omitted. A mold frame 850 has an integral structure instead of the separation type structure described above. That is, the mold frame 850 has a rectangular hollow frame shape, and is fastened with the first chassis member 910 and the second chassis member 920. Thus configured, it is possible to reduce the production cost of the separation type of bottom chassis 900 and to simplify the assembling process.

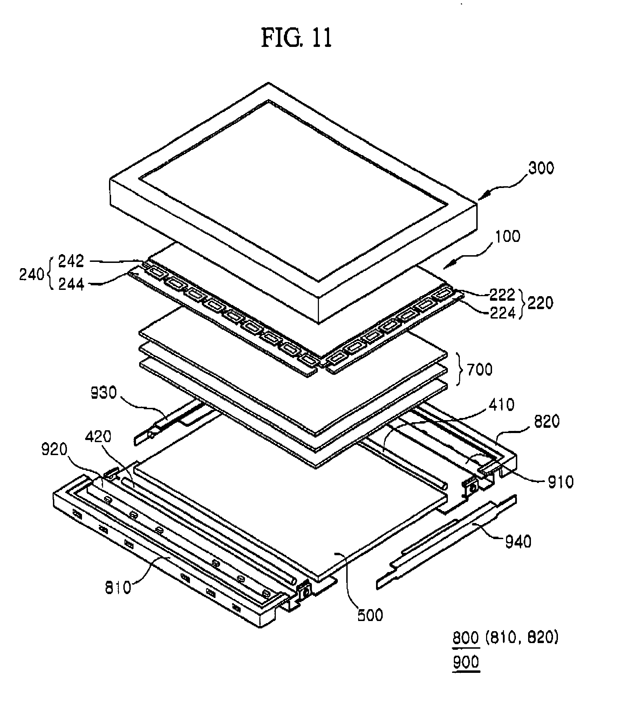

FIG. 11 is an exploded perspective view of a liquid crystal display that comprises the separation type of bottom chassis according to an exemplary embodiment of the present invention.

With reference to FIG. 11, a liquid crystal display 2000 comprises a top chassis 300, a liquid crystal display panel 100, driving circuit parts 220 and 240, a plurality of optical sheets 700, a light source unit 400, a light guide plate 500, a reflection panel (not shown), a mold frame 800, and a separation type of bottom chassis 900.

The mold frame 800 comprises a first mold frame member 810 and a second mold frame member 820. A receiving region is formed in the mold frame 800 to guide the liquid crystal display panel 100 displaying images. The liquid crystal display panel 100 is provided with a thin film transistor substrate in which a high opening ratio is ensured using an organic insulating film (not shown), and a color filter substrate comprising a black matrix to which the DC voltage that is different from the common voltage applied to the common electrode is applied.

The driving circuit parts 220 and 240 are connected to the liquid crystal display panel 100, and comprise a gate printed circuit board 224 on which a control IC is mounted to apply a gate signal to a gate line of the TFT substrate 200, a data printed circuit board 244 on which a control IC (integrated circuit) is mounted to apply a data signal to a data line of the TFT substrate, a gate flexible printed circuit board 222 which connects the TFT substrate and the gate printed circuit board 224 to each other, and a data flexible printed circuit board 242 which connects the TFT substrate 200 and the data printed circuit board 244 to each other.

The light source unit 400 comprises the first light source 410 and the second light source 420. The light source unit 400 may also comprise a reflection sheet (not shown). The light guide plate 500 is combined with the separation type of bottom chassis 900 to convert light that is generated from the light source unit 400 and has a linear light source type of optical distribution to light that has the surface light source type of optical distribution. Examples of the light guide plate 500 may comprise a wedge type plate or a flat plate. Examples of the reflection panel may include a plate having high light reflectivity. A plurality of optical sheets 700 is disposed on the light guide plate 500 to make uniform a brightness distribution of light which is emitted from the light guide plate 500.

The top chassis 300 is fastened with the mold frame 800 so as to cover the edge of the liquid crystal display panel 100, that is, a non-display region and a portion of the lateral portion and the lower part of the mold frame 800.

As described above, the separation type of bottom chassis 900 comprises the chassis members 910, 920, 930, and 940. Among the chassis members, the first chassis member 910 and the second chassis member 920 that are disposed to be adjacent to the first light source 410 and the second light source 420, respectively, are formed to surround the first light source 410 and the second light source 420, thereby providing a light source cover. As a result, even though a separate, additional light source cover is not used as in conventional devices, light that is emitted from the light sources 410 and 420 may be efficiently incident on the light guide plate 500.

As described above, in the present invention, since an additional light source cover is not used, it is possible to reduce production costs.

In addition, since a portion of the chassis acts as the mold frame, it is possible to reduce the production cost of the mold frame. Accordingly, it is possible to further reduce the production cost of the backlight unit and the liquid crystal display.

Although the invention has been described with reference to the accompanying drawings and the preferred embodiments, the invention is not limited thereto, but is defined by the appended claims. Therefore, it should be noted that various changes and modifications may be made by those skilled in the art without departing from the technical spirit and scope of the appended claims.

## Claims

1. A chassis comprising:
a first chassis member comprising a first base plate, a first wall extending from the first base plate in a first direction, and a first cover plate extending from the first wall and facing the first base plate; and
a second chassis member comprising a second base plate, a second wall extending from the second base plate in a second direction, and a second cover plate extending from the second wall and facing the second base plate.

2. The chassis of claim 1, wherein the first direction is a direction perpendicular to the first base plate, and
the second direction is a direction perpendicular to the second base plate.

3. The chassis of claim 1, further comprising:
a third chassis member; and
a fourth chassis member.

4. The chassis of claim 3, wherein the third chassis member comprises a third base plate, a third wall extending from the third base plate and disposed perpendicular to the third base plate, and a third cover plate extending from the third wall and facing the third base plate, and
the fourth chassis member comprises a fourth base plate, a fourth wall extending from the fourth base plate and disposed perpendicular to the fourth base plate, and a fourth cover plate extending from the fourth wall and facing the fourth base plate.

5. The chassis of claim 3, wherein the first to the fourth chassis members comprise first to fourth fastening parts, respectively, to perform fastening, and
wherein the first to the fourth fastening parts are formed at opposing ends of the first to the fourth chassis members, respectively.

6. The chassis of claim 5, wherein the first fastening parts are fastened with the third fastening part formed at one end of the third chassis member and the fourth fastening part formed at one end of the fourth chassis member and
the second fastening parts are fastened with the third fastening part formed at the other end of the third chassis member and the fourth fastening part formed at the other end of the fourth chassis member.

7. A backlight unit comprising:
a chassis including a first chassis member which comprises a first base plate, a first wall extending from the first base plate and disposed perpendicular to the first base plate, and a first cover plate extending from the first wall and facing the first base plate, and a second chassis member;
a mold frame fastened with the chassis;
a light source unit comprising a light source disposed in the chassis; and
a light guide plate.

8. The backlight unit of claim 7, wherein the light source unit further comprises a first reflection sheet attached to an inner surface of at least one of the first and the second chassis members.

9. The backlight unit of claim 7, wherein the first chassis member is combined with the light guide plate and spaced apart from a first lateral portion of the light guide plate to provide a space, and
the light source unit comprises a first light source that is disposed between the first wall of the first chassis member and the first lateral portion of the light guide plate.

10. The backlight unit of claim 9, wherein the first chassis member is fitted along the first lateral portion of the light guide plate so that the first cover plate is disposed above an upper area of the first lateral portion of the light guide plate, and the first base plate is disposed below a lower area of the first lateral portion of the light guide plate, the first cover plate, the first wall, and the first base plate covering the light source.

11. The backlight unit of claim 9, wherein the second chassis member comprises a second base plate, a second wall extending from the second base plate and disposed perpendicular to the second base plate, and a second cover plate extending from the second wall and facing the second base plate.

12. The backlight unit of claim 11, wherein the second chassis member is combined with the light guide plate and spaced apart from a second lateral portion of the light guide plate to provide a space,
the light source unit comprises a second light source disposed between the second wall of the second chassis member and the second lateral portion of the light guide plate, and
wherein the second chassis member is fitted along the second lateral portion of the light guide plate so that the second cover plate is disposed above an upper area of the second lateral portion of the light guide plate, and the second base plate is disposed below a lower area of the second lateral portion of the light plate, the second cover plate, the second wall, and the second base plate covering the second light source.

13. The backlight unit of claim 7, further comprising:
a third chassis member; and
a fourth chassis member.

14. The backlight unit of claim 13, wherein the light source unit further comprises a second reflection sheet attached to an inner surface of at least one of the third and fourth chassis members.

15. The backlight unit of claim 13, wherein the third chassis member comprises a third base plate, a third wall extending from the third base plate and disposed perpendicular to the third base plate, and a third cover plate extending from the third wall and facing the third base plate.

16. The backlight unit of claim 15, wherein the third chassis member is combined with the light guide plate and spaced apart from a third lateral portion of the light guide plate to provide a space, and
a light source unit comprises a third light source disposed between the third wall of the third chassis member and the third lateral portion of the light guide plate.

17. The backlight unit of claim 13, wherein the fourth chassis member comprises a fourth base plate, a fourth wall extending from the fourth base plate and disposed perpendicular to the fourth base plate, and a fourth cover plate extending from the fourth wall and facing the fourth base plate.

18. The backlight unit of claim 17, wherein the fourth chassis member is combined with the light guide plate and spaced apart from a fourth lateral portion of the light guide plate to provide a space, and
the light source unit comprises a fourth light source disposed between the fourth wall of the fourth chassis member and the fourth lateral portion of the light guide plate.

19. The backlight unit of claim 12, wherein the light source unit comprises a fifth light source and a sixth light source disposed between walls of the chassis members and lateral portions of light guide plates, and
the fifth light source and the sixth light source have an 'L' shape.

20. The backlight unit of claim 13, wherein the first to the fourth chassis members comprise first to fourth fastening parts, respectively, to perform fastening.

21. The backlight unit of claim 7, wherein the mold frame comprises a first mold frame member fastened with the first chassis member, and a second mold frame member fastened with the second chassis member.

22. The backlight unit of claim 21, wherein fifth fastening parts and sixth fastening parts are formed at the first chassis member and the first mold frame member, respectively, and
seventh fastening parts and eighth fastening parts are formed at the second chassis member and the second mold frame member, respectively.

23. A liquid crystal display comprising:
a backlight unit comprising:
a chassis including a first chassis member comprising a first base plate, a first wall extending from the first base plate in a first direction, and a first cover plate extending from the first wall and facing the first base plate, and a second chassis member comprising a second base plate, a second wall extending from the second base plate in a second direction, and a second cover plate extending from the second wall and facing the second base plate;
a mold frame fastened with the chassis;
a light source unit comprising a light source disposed in the chassis; and
a light guide plate; and
a liquid crystal display panel disposed on the backlight unit and displaying a pixel.

24. The liquid crystal display of claim 23, further comprising a third chassis member and a fourth chassis member fastened with the first chassis member and the second chassis member, and
wherein the light source unit further comprises a reflection sheet attached to an inner surface of at least one of the first to the fourth chassis members.

25. A method of manufacturing a chassis, the method comprising:
forming at least two chassis members;
forming at least two fastening parts; and
fastening at least two chassis members together using at least two fastening parts,
wherein each of at least two chassis members comprising a base plate, a wall extending from the base plate in a first direction, and a cover plate extending from the wall and facing the base plate.
